# EUROPÄISCHE PATENTSCHRIFT

(11) **EP 1 378 074 B1**
(45) Veröffentlichungstag und Bekanntmachung des Hinweises auf die Patenterteilung: **22.08.2012**
(21) Anmeldenummer: 02737790.2
(22) Anmeldetag: 12.04.2002
(51) Int. Cl.: H04B 10/105

(54) **VORRICHTUNG UND EINE ANLAGE ZUR OPTISCHEN ÜBERTRANGUNG VON DATEN ZWISCHEN SATELLITEN**
DEVICE AND SYSTEM FOR THE OPTICAL TRANSMISSION OF DATA BETWEEN SATELLITES
DISPOSITIF ET SYSTEME DE TRANSMISSION OPTIQUE DE DONNEES ENTRE DES SATELLITES

(30) Priorität: 12.04.2001 DE 10118335
(43) Veröffentlichungstag der Anmeldung: 07.01.2004
(73) Patentinhaber: Tesat-Spacecom GmbH & Co. KG, 71501 Backnang (DE)
(72) Erfinder: HILDEBRAND, Ulrich, 70736 Fellbach (DE)
(74) Vertreter: Avenhaus, Beate
(86) Internationale Anmeldenummer: PCT/DE2002/001383
(87) Internationale Veröffentlichungsnummer: WO 2002/084902

(56) Entgegenhaltungen:
- US-A- 3 536 922
- US-A- 3 764 213
- US-A- 5 940 045
- US-A- 6 016 219
- ESKILDSEN L ET AL: "Optical amplifiers for WDM systems and networks" MILITARY COMMUNICATIONS CONFERENCE, 1994. MILCOM '94. CONFERENCE RECORD, 1994 IEEE FORT MONMOUTH, NJ, USA 2-5 OCT. 1994, NEW YORK, NY, USA,IEEE, US, 2. Oktober 1994 (1994-10-02), Seiten 350-356, XP010149867 ISBN: 0-7803-1828-5

## Beschreibung

### Stand der Technik

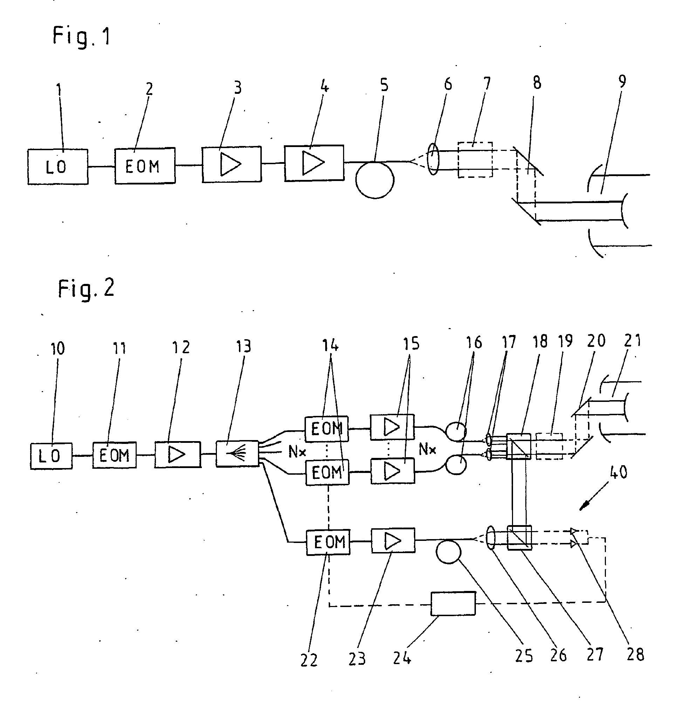

Es ist bekannt, für die optische Freiraumübertragung zwischen Satelliten optische Hochleistungssender zu verwenden. Ein an sich bekanntes Sendesystem zur optischen Übertragung von Daten zwischen Satelliten ist in der Fig. 1 dargestellt. Dabei liefert ein Laser- Oszillator 1 ein optisches Signal konstanter Leistung und Frequenz, mit kleiner spektraler Breite. Der folgende elektro-optische Modulator 2 prägt dem Signal die Dateninformation auf. Die Modulation zur Aufprägung der zu übertragenden Daten auf das optische Signal kann entweder über eine Amplitudenmodulation oder über eine der verschiedenen Phasenmodulationen (PSK) erfolgen.

Das so erzeugte optische Signal wird einem ersten optischen Vorverstärker 3 zugeführt. In dem als Faserverstärker ausgebildeten Vorverstärker 3 wird die optische Leistung des Signals auf einen Pegel von typisch einem Watt erhöht. Durch einen nachgeschalteten Kristallverstärker 4, wird das optische Signal auf einen für die Übertragung notwendigen hohen optischen Pegel verstärkt. Die Leistungsstufe der Verstärkerkette ist fasergekoppelt ausgeführt, um die Strahlen mit Hilfe der Faser 5 über eine größere Entfernung zur abgesetzten optischen Einheit zu führen. Vom Laser-Oszillator 1 und bis zum Kollimator 6, wird das optische Signal in einer Faser 5 geführt. Alle Fasern 5 im System sind polarisationserhaltend. Über dem Kollimator 6, wird der optische Strahl über eine optionale Sende- und Empfangsweiche 7 und die Verstellspiegel 8 zur Strahlausrichtung zum Spiegelteleskop 9 geführt und von dort zur Gegenstation gesendet.

Nachteilig bei dieser Vorrichtung zur optischen Übertragung von Daten ist, dass für Systeme mit sehr hoher Sendeleistung die Anforderungen in die Signaltrennung zwischen Sende- und Empfangspfad so groß werden, dass man sie innerhalb eines gemeinsamen optischen Pfades nicht mehr beherrschen kann. Dann ist es erforderlich, die beiden Pfade komplett zu trennen; das heißt ein eigenes Teleskop 9 für Sender und Empfänger zu verwenden. In diesem Falle entfällt zwar die Sende- und Empfangsweiche 7, aber durch den Einsatz eines zusätzlichen Spiegelteleskops 9 werden insgesamt die Kosten der Anlage erheblich erhöht.

Aus der US-A-3 536 922 geht ein optisches Kommunikationssystem hervor, bei dem ein polarisationsmodulierter Laserstrahl zum Einsatz kommt, wobei die Polarisationsebene mittels Modulationselementen in Rotation versetzt wird, auf eine Auswertungseinheit (wie z. B. von der "Art eines doppeltbrechenden Prismas) gelenkt, und bei dem der Strahl in zwei Strahlen aufgefächert wird, von denen jeder um 180° intensitätsmoduliert gegenüber dem anderen ist. Die beiden Strahlen werden über zwei Kollimatoren auf entsprechende Empfangsteleskope gerichtet. Die Strahlen sind in einem minimalen Abstand von einander getrennt, derart, dass die Schwankungen der Brechungsindices unabhängig sind. Die empfangenen Laserstrahlen werden anschließend umgeformt und zusammengeführt, um das ursprüngliche Signal wieder abzubilden.

Gemäß einem anderen Merkmal der Erfindung wird jeder der beiden Ausgänge der Auswertungseinheit in zwei Strahlen mittels Strahlteilereinrichtungen aufgefächert und entsprechend auf zwei Kollimatoren geworfen mit dem Ergebnis, dass ein Quadruplex-Kommunikationssystem entsteht. Mit anderen Worten überträgt das optische Quadruplex-Kommunikationssystem, bei dem die Übertragungskollimatoren zwei Strahlen getrennt auf die Empfangsteleskope richten, wobei jedes der Empfangsteleskope zwei Übertragungsstrahlen von den verschiedenen Kollimatoren empfängt, derart, dass zwei Bilder entstehen. Fotoelektrische Detektorverstärker werden an jedem der Bildpunkte installiert und die Signalübermittlung - oder - übertragung wird insgesamt durch vier Lichtstrahlen bewirkt, die jeweils über einen getrennten Pfad übertragen werden.

Die Merkmale dieses bekannten Systems sind mit der erfindungsgemäßen Vorrichtung zur optischen Übertragung von Daten zwischen Satelliten nicht vergleichbar. Große Datenraten über größere Entfernungen lassen sich damit nicht übertragen.

In der Veröffentlichung "OPTICAL AMPLIFIERS FOR WDM SYSTEMS AND NETWORKS, L. Eskildsen et al." werden die bei optischen Wellenlängenmultiplex-Verfahren in der Praxis mit Faserverstärkerketten sich ergebenden technischen Erfordernisse für transparente Lichtwellen-Netzwerke abgehandelt, bei denen Signale auf dem Weg von einer Quelle zum Ziel über eine Folge zwischengeschalteter Knoten ohne optoelektrischer Umwandlung auftreten, was nicht Gegenstand vorliegender Erfindung ist.

### Vorteile der Erfindung

Die erfindungsgemäße Vorrichtung zur optischen Übertragung von Daten zwischen Satelliten mit den im Anspruch 1 genannten Merkmalen bietet demgegenüber den Vorteil, dass große Datenraten über sehr große Entfernungen übertragen werden können. Die Datenraten können dabei bis zu 10 Gbit/s betragen und bis zu 90.000 km bei einer Verbindung von zwei Satelliten auf geostationärer Bahn übertragen werden. Dadurch, dass ein Vorverstärker mit einer Leistungsteilerstufe verbunden ist, der eine Parallelschaltung von wenigstens zwei jeweils in Reihe geschalteten Phasenstellern und Hauptverstärkern, zur Verstärkung und Einstellung der optischen Signale, nachgeschaltet ist und die Hauptverstärker über ein der Anzahl der Reihenschaltungen entsprechendes Bündel von optischen Wellenleitern mit der entsprechenden Anzahl der Kollimatoren verbunden ist, wird vorteilhaft erreicht, dass die Ausgangsleistung zur Übertragung einer Datenrate bis zu 10 Gbit/s auf eine erforderliche Größenordnung von ca. 10 W verstärkt wird, ohne dass dabei die Leistung des Verstärkers erhöht werden muss. Durch die Parallelschaltung von beliebig vielen gleichen Verstärkern, können sehr hohe optische Ausgangsleistungen realisiert werden. Es ist kein Spezialverstärker für hohe Ausgangsleistungen notwendig, sondern es können Geräte mittlerer Leistung zur optischen Übertragung der Daten verwendet werden. Durch die Parallelschaltung der einzelnen Verstärker wird insgesamt ein sehr hoher Wirkungsgrad der Verstärkereinheit erzielt.

Ein weiterer Vorteil der erfindungsgemäßen Lösung besteht darin, dass durch die Führung der optischen Signale in Fasern das gesamte System flexibler gestaltet werden kann. Die optische Leistung in jeder einzelnen Faser ist moderat. Die optischen Leistungsdichten bei der Verwendung eines einzelnen Verstärkers beziehungsweise bei einer Kaskade von Verstärkern sind wesentlich schwieriger zu beherrschen. Weiterhin wird durch die Parallelschaltung der Sendeverstärker die Systemzuverlässigkeit der Anlage erhöht. Der Ausfall einer Stufe führt nicht zwangsläufig, wie bei einer Kette, zum Totalverlust des Gesamtsystems, sondern erlaubt noch einen Betrieb mit verminderter Leistungsfähigkeit.

In einer bevorzugten Ausgestaltung der Erfindung ist den jeweiligen Phasenstellern eine Phasenregeleinheit zugeordnet. Dadurch wird einerseits die optische Phase unabhängig von der optischen Intensität gemessen und stabilisiert. Andererseits erfolgt durch die Phasenregefeinheit eine Anpassung der Vorrichtung als Sende- oder Backeneinheit. Dabei ist zur Übertragung sehr großer Datenraten zwangsläufig ein starker, scharfgebündelter Sendestrahl erforderlich. Für die Such- und Erfassungsphase sind die Anforderungen eher umgekehrt. Der Strahl könnte etwas mehr aufgeweitet werden, da für diese Phase die zu übertragende Bandbreite nicht so groß ist und damit die Leistung am Empfänger stark reduziert werden kann. Durch die erfindungsgemäße Phasenregeleinheit erfolgt eine kontinuierliche Aufweitung des Sendestrahls bis zum etwa 10-fachen des nominellen Sendestrahls. Das Verhältnis von minimaler zu maximaler Strahlöffnung hängt von der Auslegung des Systems und insbesondere von der Anzahl der Einzelsender ab. Durch die vergrößerte Sendekeule vereinfachen sich die Suchalgorithmen.

Gemäß der erfindungsgemäßen Anlage zur optischen Übertragung von Daten zwischen Satelliten mit den im Anspruch 19 genannten Merkmalen ist vorgesehen, dass wenigstens zwei erfindungsgemäße Anlagen in den Satelliten vorhanden sind.

Weitere vorteilhafte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
Fig. 1 eine schematische Ansicht einer Vorrichtung zur optischen Übertragung von Daten entsprechend dem bekannten Stand der Technik;
Fig. 2 eine schematische Ansicht einer Vorrichtung zur optischen Übertragung von Daten entsprechend der erfindungsgemäßen Lösung;
Fig. 3 eine Variante der erfindungsgemäßen Lösung als Einzelheit;
Fig. 4 eine Einzelheit der erfindungsgemäßen Lösung und
Fig. 5 eine Variante gemäß Fig. 4.

### Beschreibung des Ausführungsbeispiels

In Fig. 2 ist die schematische Ansicht einer Vorrichtung zur optischen Übertragung von Daten zwischen Satelliten als Blockschaltbild dargestellt. Die ersten Stufen des Hochleistungssenders zur optischen Übertragung von Daten bestehen aus einem an sich bekannten Laser- Oszillator 10, zur Erzeugung eines optischen Signals mit konstanter Leistung und Frequenz und mit kleiner spektraler Breite, und einem elektro-optischen Modulator 11, mit dem die zu übertragenden Daten auf das optische Signal moduliert werden. Ein dem Modulator 11 nachgeordneter optischer Vorverstärker 12 erhöht die optische Leistung des Signals, um die Verluste in den anschließenden Strahlungsformungsstufen auszugleichen und für die später näher erläuterten Hauptverstärker 15 eine ausreichende Eingangsleistung zu gewährleisten. Das nachfolgend eingehend beschriebene erfindungsgemäß verstärkte und eingestellte optische Signal wird in an sich bekannter Weise über eine Sende- und Empfangsweiche 19 und einen Verstellspiegel 20 einem Spiegelteleskop 21 zur Übertragung zugeleitet.

Erfindungsgemäß gelangt das mit den zu übertragenden Daten modulierte optische Signal vom Vorverstärker 12 zu einer Strahlungsformungseinheit. Die Strahlungsformungseinheit besteht aus einer Leistungsteilerstufe 13 und mehreren parallel angeordneten Phasenstellern 14. In einer weiteren Stufe wird das aus den Phasenstellen 14 kommende optische Signal mittels eines den jeweiligen Phasenstellern 14 nachgeordneten Hauptverstärkers 15 verstärkt. Mit den Phasenstellern 14 erfolgt eine beliebige Einstellung der Phasenlagen der einzelnen optischen Strahlen. Die Einstellung und Regelung der Phasenlagen über den Phasensteller 14 wird an späterer Stelle ausführlicher dargelegt.

Die Leistungsteilerstufe 13 kann als Baum von polarisationserhaltenden Wellenleiterkopplern ausgeführt werden. Entsprechend dieser Variante wird die Leistungsverteilerstufe 13 über Faserkabel entsprechend dem Baum 16 mit den nachfolgenden parallel angeordneten Phasenstellern 14 und Hauptverstärkern 15 eingesetzt werden.

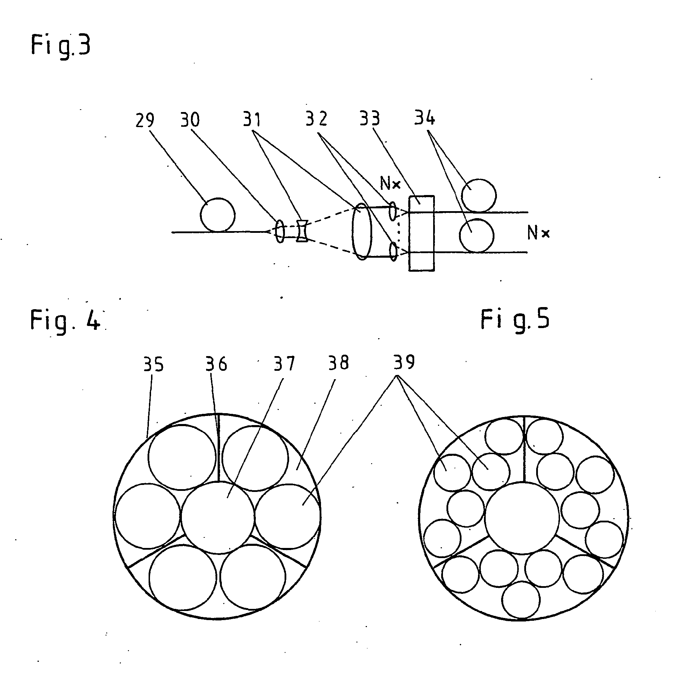

Eine Variante der Ausbildung der Leistungsteilerstufe 13 mit Phasensteller 14 kombiniert ist in Fig. 3 dargestellt. Hier wird die Leistung im Freistrahl aufgeteilt und dann direkt in die Phasenstellerbank 33 eingekoppelt. Der Leistungsteiler 13 mit Phasensteller 14 besteht aus einem Kollimator 30, einem stark anamorphotischen Teleskop 31 und einer entsprechenden Linsenanordnung 32, dass die Leistung in die Phasenstellerbank 33 einkoppelt. Die Leistungsteilerstufe 13 ist eingangsseitig über eine Glasfaser 29 mit dem Vorverstärker 12 und der Phasensteller 14 ausgangsseitig über entsprechende Glasfasern 34 mit den jeweiligen Hauptverstärkern 15 verbunden.

Die Phasenstellerbank 33 ist entweder monolithisch ausgeführt, das heißt-, dass alle Wellenleiter mit ihren Elektroden auf einer Kristallscheibe aus Lithium-Niobat angeordnet sind, oder die Phasenstellerbank 33 ist modular aufgebaut, bei der jeweils einzelne Modulatoren vorhanden sind.

Die der Leistungsteilerstufe 13 (parallel) nachgeschalteten Phasensteller 14 bestehen jeweils aus einem elektro-optischen Modulator. Der elektro-optische Modulator verstellt in Abhängigkeit von der anliegenden Spannung die optische Dichte und damit die Phase des optischen Signals. Wenn dieser Modulator als Wellenleitermodulator ausgeführt wird, können Bandbreiten bis zu mehreren GHz realisiert werden. Das hat zur Folge, dass in der Empfangsstation der Sendestrahl in der Such- und Erfassungsphase besser erkannt werden kann. Die Leistung der Empfangsstation kann dadurch wesentlich reduziert werden. Die Phasenstellerbank kann dabei ebenfalls wieder monolithisch oder modular ausgeführt werden.

Wenn kleine Bandbreiten von nur einigen kHz für die Phasenverstellung ausreichend sind, wird als entsprechender Phasensteller 14 jeweils eine Glasfaser um einen Piezokern gewickelt. Eine angelegte Spannung ändert den Durchmesser des Piezokerns und damit auch die Länge der Faser beziehungsweise die Laufzeit in der Faser, wodurch die Phase des optischen Signals verstellt wird.

Die im Phasensteller 14 vorgenommene Phasensteuerung ermöglicht die Einstellung von verschiedenen Abstrahlwinkeln in Bezug auf die optische Achse des Spiegelteleskops 21. Diese Möglichkeit kann zur Einstellung von Vorhalte- oder Nachführwinkeln verwendet werden. Da die Verstellung ohne bewegte Massen erfolgt, sind sehr große Winkelgeschwindigkeiten beziehungsweise Bandbreiten möglich.

Das optische Signal gelangt über den Faserkabelbaum 16 von den Phasenstellern 14 zu einem den Phasenstellern 14 jeweilig nachgeordneten Hauptverstärker 15. Durch die optischen Hauptverstärker 15 wird für jeden Kanal die Leistung des Signals auf eine Höhe von ca. 0,5 W erhöht. Die Ausgangsleistung der optischen Hauptverstärker 15 wird überwacht und kann den Anforderungen angepasst werden. Der Hauptverstärker 15 ist als ein entsprechender Faserverstärker ausgebildet.

Vom Hauptverstärker 15 gelangt das verstärkte optische Signal über den Faserkabelbaum 16 zu den Kollimatoren 17 für die Sub-Aperturen 39. Die Strahlen aus den einzelnen Kollimatoren 17 müssen exakt parallel aufeinander ausgerichtet sein. Für jede Anzahl von Einzelsendern ist eine maximale Packungsdichte anzustreben. Die Fig. 4 und die Fig. 5 zeigen jeweils das Schattenbild der Ausgangspupille des Kollimators 17, wobei in den einzelnen Figuren eine unterschiedliche Anzahl von Sub-Aperturen 39 dargestellt ist. Die Pupille ist durch den Rand 35 eines Primärspiegels begrenzt, der über mindestens zwei Streben 36 mit einem zentral angeordneten Spiegel 37 verbunden ist. Die Abschattungen entstehen durch die Streben 36 zum Halten des Sekundärspiegels und durch den Spiegel 37 selbst. In der verfügbaren Fläche 38 des Primärspiegels sind die Sub-Aperturen 39 angeordnet. Aus den Fig. 4 und 5 ist zu erkennen, dass für die Sub-Aperturen 39 Linsensysteme anzustreben sind, die gewissermaßen keinen Rand, das heißt nur, eine sehr dünne Fassung, haben.

Die Amplitudenverteilung des Senders kann der Austrittspupille eines Spiegelteleskops 21 angepasst werden. Die üblichen Abschattungen durch den Sekundärspiegel und die Haltestreben 36 und die damit verbundenen Leistungsverluste werden vermieden. Es erübrigt sich auch der Aufwand zur Unterdrückung der an diesen Stellen entstehenden Rückreflexionen.

Der aus dem Kollimator 17 austretende optische Strahl wird über einen Auskoppelteiler 18, die optionale Sende- und Empfangsweiche 19 und die Verstellspiegel 20 zum Spiegelteleskop 21 geführt und von dort zur Gegenstation gesendet.

Die Einstellung und Regelung der optischen Phasen in den Sub-Aperturen 39 erfordert eine Messung der selben. Dazu zweigt der Auskoppelteiler 18 einen Prüfstrahl, der ca. 1% des Sendestrahls entspricht, ab und leitet diesen einem Mischer 27 einer Phasenregeleinheit 40 zu. Der Prüfstrahl dient zur Überwachung und Regelung der Phaseneinstellung. Dazu wird der Prüfstrahl im Mischer 27 mit einem Referenzstrahl überlagert und über ein Photodiodenfeld 28 die Phasenlage aller Sub-Aperturen 39 vermessen. Der Referenzstrahl wird am Leistungsteiler 13 abgenommen und einem Phasensteller 22 der Phasenregeleinheit 40 zugeführt. Der Referenzstrahl hat also dieselbe Frequenz wie der zu vermessende Sendestrahl. Im Phasensteller 22 kann die Referenzphase abgeglichen, beziehungsweise auch moduliert werden. Ein optischer Verstärker 23 sorgt für ausreichende Pegel am Photodiodenfeld 28. Die Glasfaser 25, durch die einzelne Bauteile der Phasenregeleinheit 40 verbunden sind, leitet das Licht, beziehungsweise das optische Signal, zu einem Kollimator 26, der eine perfekte Phasenfront erzeugt, die über den optischen Mischer 27 auf das Photodiodenfeld 28 gelangt. Durch die Überlagerung der Einzelstrahlen mit dem Referenzstrahl kann die optische Phase als Intensität von den Photodioden des Photodiodenfeldes 28 detektiert werden. Der optische Verstärker 23 ist optional und kann bei ausreichendem Rauschabstand auf den Photodioden 28 entfallen. Das Photodiodenfeld 28 ist über einen Regler 24 mit dem Phasensteller 22 der Phasenregeleinheit 40 verbunden. Ein Ausgangsanschluss des Phasenstellers 22 der Phasenregeleinheit 40 ist zur Regelung und Einstellung des optischen Signals mit den jeweiligen Phasenstellern 14 der Vorrichtung zur optischen Übertragung von Daten verbunden.

Die Phasenmessung vor dem Spiegelteleskop 21 erlaubt die Kompensation von allen Phasenfehlern der Komponenten davor. Dadurch reduzieren sich die Anforderungen an die thermomechanische Stabilität des gesamten optischen Systems. Die Phasenregeleinheit 40 erfüllt mehrere Aufgaben. Sie erzeugt das Signal zur Modulation der Referenzphase mit dem Phasensteller 22. Beim Einsatz einer hochfrequenten Modulation kann über die Anwendung einer elektrischen Phasenregelung die optische Phase unabhängig von der optischen Intensität gemessen und damit stabilisiert werden.

Für die Phaseneinstellung sind drei Betriebsmoden zu unterscheiden:

Der normale Betriebsfall für den optischen Hochleistungssender ist ein scharf gebündelter Sendestrahl, bei dem maximale Leistungsdichte im Fernfeld gefordert ist. Dazu sind die Phasen der einzelnen Sender genau aufeinander abzustimmen. Phasendifferenzen von 10° und weniger sind zu realisieren. Für den Fall der maximalen Strahlaufweitung während der Erfassungsphase muss die Phasenbeziehung zwischen den einzelnen Sub-Aperturen 39 total zerstört werden. Die Sender müssen gewissermaßen inkohärent addiert werden. Die Phase an den Modulatoren der Phasensteller 14 muss sehr schnell und unabhängig von den anderen durchmodelliert werden, so dass der Empfänger von diesen Änderungen nichts merkt. Das bedeutet, dass die Frequenz der Phasenänderungen am Sender wesentlich größer sein muss als die Bandbreite des Empfängers. Dazu können Rauschquellen oder digitale Zufallszahlengeneratoren verwendet werden. Im Spezialfall der Winkeleinstellung ist ein Phasengradient über der kompletten Apertur erforderlich. Dadurch lassen sich entsprechend der bekannten "Phased Array" Technik in einem begrenzten Winkelbereich Vorhalte- oder Nachführwinkel einstellen. Die erzielbare Bandbreite ist durch die Modulatoren gegeben und damit insbesondere im Vergleich zu mechanischen Lösungen sehr hoch. Der Winkelbereich beschränkt sich auf die Beugungsöffnung einer einzelnen Sub-Apertur 39.

Gemäß der erfindungsgemäßen Anlage zur optischen Übertragung von Daten zwischen Satelliten ist vorgesehen, dass wenigstens zwei erfindungsgemäße Anlagen in den Satelliten vorhanden sind.

Der Vorteil der erfindungsgemäßen Lösung besteht somit darin, dass durch die Parallelschaltung der einzelnen Phasensteller und Hauptverstärker das zu übermittelnde Signal derart verstärkt wird, dass große Datenraten über sehr große Entfernungen zwischen zwei Satelliten übertragen werden können. Außerdem kann durch die Regeleinheit die Vorrichtung so eingestellt werden, dass sie sowohl als Sende- als auch Empfangsstation arbeiten kann. Ein zusätzliches Spiegelteleskop für die Empfangsstation ist nicht erforderlich.

### Bezugszahlenliste

- 1: Laser-Oszillator
- 2: Elektro-optischer Modulator
- 3: Optischer Vorverstärker
- 4: Kristallverstärker
- 5: Faser
- 6: Kollimator
- 7: Sende- und Empfangsweiche
- 8: Verstellspiegel
- 9: Spiegelteleskop
- 10: Laser-Oszillator
- 11: Elektro-optischer Modulator
- 12: Optischer Vorverstärker
- 13: Leistungsteilerstufe
- 14: Phasensteller
- 15: Hauptverstärker
- 16: Faserkabelbaum (Bündel von optischen Wellenleiter)
- 17: Kollimator
- 18: Auskoppelteiler
- 19: Sende- und Empfangsweiche
- 20: Verstellspiegel
- 21: Spiegelteleskop
- 22: Phasensteller
- 23: Optischer Verstärker
- 24: Regler
- 25: Glasfaser
- 26: Kollimator
- 27: Mischer
- 28: Photodiodenfeld
- 29: Glasfaser
- 30: Kollimator
- 31: Teleskop
- 32: Linsenanordnung
- 33: Phasenstellerbank
- 34: Glasfaserleiter
- 35: Rand an einem Primärspiegel
- 36: Streben
- 37: Spiegel
- 38: Fläche
- 39: Sub-Aperturen
- 40: Phasenregeleinheit

## Patentansprüche

1. Vorrichtung zur Übertragung von optischen Daten zwischen Satelliten, die einen Laser-Oszillator (10) zur Erzeugung eines optischen Signals, einen Modulator (11) zur Modulierung des optischen Signals mit einer Dateninformation, und eine Verstärkeranordnung, eine Kollimatoranordnung und eine Sendeeinrichtung zur Übertragung der Signale umfasst, **dadurch gekennzeichnet, dass** ein Vorverstärker (12) mit einer Leistungsteilerstufe (13) verbunden ist, der eine Parallelschaltung von wenigstens zwei jeweils in Reihe geschalteten Phasenstellern (14) und Hauptverstärkern (15), zur Verstärkung und Einstellung der optischen Signale, nachgeschaltet ist und die Hauptverstärker (15) über ein der Anzahl der Reihenschaltungen entsprechendes Bündel (16) von optischen Wellenleitern mit der entsprechenden Anzahl der Kollimatoren (17) verbunden sind.

2. Vorrichtung nach Anspruch 1, **dadurch gekennzeichnet, dass** die Leistungsteilerstufe (13) aus einer Vielzahl von polarisationserhaltender Wellenleiterkopplern besteht, die mit den Phasenstellern (14) verbunden sind.

3. Vorrichtung nach Anspruch 1, **dadurch gekennzeichnet, dass** die Leistungsteilerstufe (13) mit Phasensteller (14) kombiniert ist und aus einem Kollimator (30), einem nachgeschalteten stark anamorphotischen Teleskop (31), einer entsprechenden Linsenanordnung (32) zur Aufteilung des optischen Signals und einer Phasenstellerbank (33) zur Zuführung des optischen Signals über einen Glasfaserleiter (34) zu den Hauptverstärkern (15) besteht.

4. Vorrichtung nach Anspruch 3, **dadurch gekennzeichnet, dass** die Phasenstellerbank (33) monolithisch ausgeführt ist, wobei alle Wellenleiter mit ihren Elektroden auf einer Kristallscheibe aus Lithium- Niobat angeordnet sind.

5. Vorrichtung nach Anspruch 3, **dadurch gekennzeichnet, dass** die Phasenstellerbank (33) modular ausgeführt ist und aus einzelnen Modulatoren besteht.

6. Vorrichtung nach einem der vorhergehenden Ansprüche, **dadurch gekennzeichnet, dass** der Phasensteller (14) eine elektro-optischer Modulator ist, mit dem in Abhängigkeit von der anliegenden Spannung die optische Dichte und damit die Phase verstellt wird.

7. Vorrichtung nach Anspruch 6, **dadurch gekennzeichnet, dass** der elektro-optische Modulator ein Wellenleitermodulator ist.

8. Vorrichtung nach Anspruch 1 bis 5, **dadurch gekennzeichnet, dass** der Phasensteller (14) eine um einen Piezokern gewickelte Glasfaser ist, bei dem die Länge der Glasfaser und damit die Phase verstellt wird.

9. Vorrichtung nach einem der vorhergehenden Ansprüche, **dadurch gekennzeichnet, dass** der Hauptverstärker (15) ein Faserverstärker ist.

10. Vorrichtung nach einem der vorhergehenden Ansprüche, **dadurch gekennzeichnet, dass** die Ausgangspupille des Kollimators (17) durch einen Rand (35) eines Primärspiegels begrenzt wird, der über mindestens zwei Streben (36) mit einem zentral angeordneten Spiegel (37) verbunden ist, wobei in einer verfügbaren Fläche (38) mehrere Sub-Aperturen (39) angeordnet sind.

11. Vorrichtung nach einem der vorhergehenden Ansprüche, **dadurch gekennzeichnet, dass** dem Kollimator (17) ein Auskoppelteiler (18) und eine Sende- und Empfangsweiche (19) nachgeschaltet sind**.**

12. Vorrichtung nach einem der vorhergehenden Ansprüche, **dadurch gekennzeichnet,**
**dass** der Sende- und Empfangsweiche (19) ein Verstellspiegel (20) und ein Spiegelteleskop (21) nachgeschaltet sind.

13. Vorrichtung nach einem der vorhergehenden Ansprüche, **dadurch gekennzeichnet, dass** den Phasenstellern (14) eine Phasenregeleinheit (40) zugeordnet ist.

14. Vorrichtung nach einem der vorhergehenden Ansprüche, **dadurch gekennzeichnet, dass** die Phasenregeleinheit (40) aus einem in Reihenschaltung angeordneten Phasensteller (22), einem Verstärker (23), einem Kollimator (26), einem Mischer (27), einem Photodiodenfeld (28) und einem Regler (24) besteht.

15. Vorrichtung nach einem der vorhergehenden Ansprüche, **dadurch gekennzeichnet, dass** die einzelnen Bauelemente der Phasenregeleinheit (40) durch eine Glasfaser (25) miteinander verbunden sind.

16. Vorrichtung nach einem der vorhergehenden Ansprüche, **dadurch gekennzeichnet, dass** ein Eingangsanschluss des Phasenstellers (22) zur Zuführung eines Referenzstrahles zur Phasenregeleinheit (40) mit der Leistungsteilerstufe (13) und ein Ausgangsanschluss des Phasenstellers (22) mit den jeweiligen Phasenstellern (14) zur Einstellung des optischen Signals verbunden sind.

17. Vorrichtung nach einem der vorhergehenden Ansprüche, **dadurch gekennzeichnet, dass** zur Zuführung eines Prüfstrahls zur Phasenregeleinheit (40) der Auskoppelteiler (18) mit dem Mischer (27) verbunden ist.

18. Vorrichtung nach einem der vorhergehenden Ansprüchen, **dadurch gekennzeichnet, dass** der dem Mischer (27) zugeführte Prüfstrahl ca. 1% des Sendestrahls entspricht.

19. Vorrichtung nach einem der vorhergehenden Ansprüchen, **dadurch gekennzeichnet, dass** die Phasenregeleinheit (40), die Phasendifferenz zwischen den Kollimatoren (17) und damit auch zwischen den Sub-Aperturen (39) konstant hält.

20. Vorrichtung nach einem der vorhergehenden Ansprüche, **dadurch gekennzeichnet, dass** die Phasenregeleinheit **(40)** die Phasendifferenz zwischen den Kollimatoren (17) und damit zwischen den Sub-Aperturen (39) zu Null macht.

21. Vorrichtung nach einem der vorhergehenden Ansprüche, **dadurch gekennzeichnet, dass** die Phasenregeleinheit (40) eine quasi zufällige Phasendifferenz mit hoher Frequenz einstellt.

22. Anlage **dadurch gekennzeichnet, dass** zur Übertragung von optischen Daten zwischen Satelliten wenigstens zwei Vorrichtungen nach einem der Ansprüche 1 bis 21 vorgesehen sind.

## Claims

1. Apparatus for transmitting optical data between satellites, which comprises a laser oscillator (10) for generating an optical signal, a modulator (11) for modulating the optical signal with data information and an amplifier arrangement, a collimator arrangement and a transmitter for transmitting the signals, **characterized in that** a preamplifier (12) is connected to a power divider stage (13), which is connected to a downstream parallel circuit of at least two respective series-connected phase adjusters (14) and main amplifiers (15) for amplification and adjustment of the optical signals, and the main amplifiers (15) are connected via a bundle (16) of optical fibres corresponding to the number of series circuits to the corresponding number of collimators (17).

2. Apparatus according to Claim 1, **characterized in that** the power divider stage (13) consists of a plurality of polarization-preserving optical fibre couplers, which are connected to the phase adjusters (14).

3. Apparatus according to Claim 1, **characterized in that** the power divider stage (13) is combined with phase adjusters (14) and consists of a collimator (30), a downstream-connected highly anamorphotic telescope (31), a corresponding lens arrangement (32) for distributing the optical signal und a phase adjuster bank (33) for feeding the optical signal via optical fibres (34) to the main amplifiers (15).

4. Apparatus according to Claim 3, **characterized in that** the phase adjuster bank (33) is implemented in monolithic form, wherein all optical fibres are arranged with their electrodes on a crystal plate of lithium niobate.

5. Apparatus according to Claim 3, **characterized in that** the phase adjuster bank (33) is implemented in modular form and consists of individual modulators.

6. Apparatus according to any one of the preceding claims, **characterized in that** the phase adjuster (14) is an electro-optical modulator, which adjusts the optical density and thus the phase depending on the voltage applied.

7. Apparatus according to Claim 6, **characterized in that** the electro-optical modulator is a waveguide modulator.

8. Apparatus according to Claims 1 to 5, **characterized in that** the phase adjuster (14) is a glass fibre wound around a piezo core, wherein the length of the glass fibre and thus the phase is adjusted.

9. Apparatus according to any one of the preceding claims, **characterized in that** the main amplifier (15) is a fibre amplifier.

10. Apparatus according to any one of the preceding claims, **characterized in that** the exit pupil of the collimator (17) is bounded by an edge (35) of a primary mirror, which is connected via at least two struts (36) to a centrally arranged mirror (37), wherein a plurality of sub-apertures (39) are arranged in an available area (38).

11. Apparatus according to any one of the preceding claims, **characterized in that** an output coupling divider (18) and a transmit and receive switch (19) are connected downstream of the collimator (17).

12. Apparatus according to any one of the preceding claims, **characterized in that** an adjustment mirror (20) and a mirror telescope (21) are connected downstream of the transmit and receive switch (19).

13. Apparatus according to any one of the preceding claims, **characterized in that** a phase control unit (40) is associated with the phase adjusters (14).

14. Apparatus according to any one of the preceding claims, **characterized in that** the phase control unit (40) consists of a phase adjuster (22), an amplifier (23), a collimator (26), a mixer (27), a photodiode array (28) and a regulator (24) arranged in a series circuit.

15. Apparatus according to any one of the preceding claims, **characterized in that** the individual components of the phase control unit (40) are connected together by a glass fibre (25).

16. Apparatus according to any one of the preceding claims, **characterized in that** an input terminal of the phase adjuster (22) for delivering a reference beam to the phase control unit (40) is connected to the power divider stage (13) and an output terminal of the phase adjuster (22) is connected to the respective phase adjusters (14) for adjusting the optical signal.

17. Apparatus according to any one of the preceding claims, **characterized in that** the output coupling divider (18) is connected to the mixer (27) for delivering a test beam to the phase control unit (40).

18. Apparatus according to any one of the preceding claims, **characterized in that** the test beam delivered to the mixer (27) corresponds to approx. 1% of the transmitted beam.

19. Apparatus according to any one of the preceding claims, **characterized in that** the phase control unit (40) maintains a constant phase difference between the collimators (17) and hence also between the sub-apertures (39).

20. Apparatus according to any one of the preceding claims, **characterized in that** the phase control unit (40) nulls the phase difference between the collimators (17) and hence between the sub-apertures (39).

21. Apparatus according to any one of the preceding claims, **characterized in that** the phase control unit (40) adjusts a quasi-random phase difference with a high frequency.

22. System, **characterized in that** for transferring optical data between satellites, at least two apparatuses according to any one of Claims 1 to 21 are provided.

## Revendications

1. Dispositif de transmission de données optiques entre des satellites, lequel comprend un oscillateur à laser (10) pour générer un signal optique, un modulateur (11) pour moduler le signal optique avec des informations de données et un arrangement amplificateur, un arrangement collimateur et un dispositif d'émission pour la transmission des signaux, **caractérisé en ce qu'**un préamplificateur (12) est relié avec un étage diviseur de puissance (13) en aval duquel se trouve un circuit parallèle composé d'au moins deux contrôleurs de phase (14) et amplificateurs principaux (15) respectivement branchés en série pour l'amplification et le réglage des signaux optiques et les amplificateurs principaux (15) sont reliés par le biais d'un certain nombre de faisceaux (16) de guides d'ondes optiques, correspondant au nombre de circuits série, à un nombre correspondant de collimateurs (17).

2. Dispositif selon la revendication 1, **caractérisé en ce que** l'étage diviseur de puissance (13) se compose d'une pluralité de coupleurs de guides d'ondes à maintien de la polarisation qui sont reliés avec les contrôleurs de phase (14).

3. Dispositif selon la revendication 1, **caractérisé en ce que** l'étage diviseur de puissance (13) est combiné avec le contrôleur de phase (14) et se compose d'un collimateur (30), d'un télescope (31) fortement anamorphotique monté en aval, d'un arrangement de lentilles (32) correspondant pour distribuer le signal optique et d'un groupe de contrôleurs de phase (33) pour acheminer le signal optique aux amplificateurs principaux (15) par le biais de fibres optiques (34).

4. Dispositif selon la revendication 3, **caractérisé en ce que** le groupe de contrôleurs de phase (33) est réalisé sous forme monolithique, tous les guides d'ondes étant disposés avec leurs électrodes sur un disque de cristal en niobate de lithium.

5. Dispositif selon la revendication 3, **caractérisé en ce que** le groupe de contrôleurs de phase (33) est réalisé sous forme modulaire et se compose de modulateurs individuels.

6. Dispositif selon l'une des revendications précédentes, **caractérisé en ce que** le contrôleur de phase (14) est un modulateur électro-optique avec lequel la densité optique et ainsi la phase est réglée en fonction de la tension appliquée.

7. Dispositif selon la revendication 6, **caractérisé en ce que** le modulateur électro-optique est un modulateur à guides d'ondes.

8. Dispositif selon l'une des revendications 1 à 5, **caractérisé en ce que** le contrôleur de phase (14) est une fibre optique enroulée autour d'un noyau piézoélectrique, sur lequel la longueur de la fibre optique et ainsi la phase est réglée.

9. Dispositif selon l'une des revendications précédentes, **caractérisé en ce que** l'amplificateur principal (15) est un amplificateur à fibre.

10. Dispositif selon l'une des revendications précédentes, **caractérisé en ce que** la pupille de sortie du collimateur (17) est limitée par un bord (35) d'un miroir primaire qui est relié par le biais d'au moins deux contrefiches (36) avec un miroir (37) disposé au centre, plusieurs ouvertures secondaires (39) étant disposées dans une surface disponible (38).

11. Dispositif selon l'une des revendications précédentes, **caractérisé en ce qu'**un diviseur à découplage (18) et un séparateur d'émission et de réception (19) sont montés en aval du collimateur (17).

12. Dispositif selon l'une des revendications précédentes, **caractérisé en ce qu'**un miroir positionnable (20) et un télescope à miroir (21) sont montés en aval du séparateur d'émission et de réception (19).

13. Dispositif selon l'une des revendications précédentes, **caractérisé en ce qu'**une unité de régulation de phase (40) est associée aux contrôleurs de phase (14).

14. Dispositif selon l'une des revendications précédentes, **caractérisé en ce que** l'unité de régulation de phase (40) se compose d'un contrôleur de phase (22), d'un amplificateur (23), d'un collimateur (26), d'un mélangeur (27), d'un champ de photodiodes (28) et d'un régulateur (24) disposés en un circuit série.

15. Dispositif selon l'une des revendications précédentes, **caractérisé en ce que** les composants individuels de l'unité de régulation de phase (40) sont reliés ensemble par une fibre optique (25).

16. Dispositif selon l'une des revendications précédentes, **caractérisé en ce qu'**une borne d'entrée du contrôleur de phase (22) est reliée avec l'étage diviseur de puissance (13) pour acheminer un rayon de référence à l'unité de régulation de phase (40) et une borne de sortie du contrôleur de phase (22) est reliée avec les contrôleurs de phase (14) respectifs pour régler le signal optique.

17. Dispositif selon l'une des revendications précédentes, **caractérisé en ce que** pour acheminer un rayon d'essai à l'unité de régulation de phase (40), le diviseur à découplage (18) est relié avec le mélangeur (27).

18. Dispositif selon l'une des revendications précédentes, **caractérisé en ce que** le rayon d'essai acheminé au mélangeur (27) correspond à environ 1 % du rayon émis.

19. Dispositif selon l'une des revendications précédentes, **caractérisé en ce que** l'unité de régulation de phase (40) maintient constante la différence de phase entre les collimateurs (17) et ainsi également entre les ouvertures secondaires (39).

20. Dispositif selon l'une des revendications précédentes, **caractérisé en ce que** l'unité de régulation de phase (40) met à zéro la différence de phase entre les collimateurs (17) et ainsi entre les ouvertures secondaires (39).

21. Dispositif selon l'une des revendications précédentes, **caractérisé en ce que** l'unité de régulation de phase (40) règle une différence de phase quasi-aléatoire avec une fréquence élevée.

22. Équipement, **caractérisé en ce qu'**au moins deux dispositifs selon l'une des revendications 1 à 21 sont prévus pour la transmission de données optiques entre des satellites.
